# EUROPÄISCHE PATENTSCHRIFT

(11) **EP 4 370 360 B1**
(45) Veröffentlichungstag und Bekanntmachung des Hinweises auf die Patenterteilung: **02.12.2026**
(21) Anmeldenummer: 22732529.7
(22) Anmeldetag: 10.06.2022
(51) Int. Cl.: B60K 1/04

(54) **VERBINDUNGSEINRICHTUNG ZUM VERBINDEN EINES BATTERIEGEHÄUSES MIT EINEM HECKWAGEN-ROHBAU EINER KRAFTWAGENKAROSSERIE**
CONNECTING DEVICE FOR CONNECTING A BATTERY HOUSING TO A REAR END BODYSHELL OF A MOTOR VEHICLE BODY
DISPOSITIF DE LIAISON POUR RELIER UN BOÎTIER DE BATTERIE À UNE CAISSE ARRIÈRE DE CARROSSERIE DE VÉHICULE À MOTEUR

(30) Priorität: 12.07.2021 DE 102021003569
(43) Veröffentlichungstag der Anmeldung: 22.05.2024
(73) Patentinhaber: Mercedes-Benz Group AG, 70372 Stuttgart (DE)
(72) Erfinder: MIGENDT, Arnold, 71067 Sindelfingen (DE); LÜCKEMANN, Andreas, 70176 Stuttgart (DE); MAO, Xiaodong, 70191 Stuttgart (DE)
(74) Vertreter: Novagraaf Group
(86) Internationale Anmeldenummer: PCT/EP2022/065814
(87) Internationale Veröffentlichungsnummer: WO 2023/285043

(56) Entgegenhaltungen:
- WO-A1-2021/043993
- DE-A1- 102016 010 353
- US-A1- 2021 078 638

## Beschreibung

Die Erfindung betrifft eine Verbindungseinrichtung zum Verbinden eines Batteriegehäuses mit einem Heckwagen-Rohbau einer Karosserie eines elektrisch antreibbaren Personenkraftwagens gemäß Oberbegriff des Anspruchs 1.

Eine derartige Verbindungseinrichtung ist beispielsweise aus der DE 10 2016 004 577 A1 bekannt und umfasst einen Querträger, an welchem eine Mehrzahl von Befestigungshülsen aufgenommen sind. Jede dieser Befestigungshülsen ist durchsetzt von einem Schraubelement, mittels welchem ein Batteriegehäuse beziehungsweise ein Batterietragrahmen des Batteriegehäuses unter Vermittlung des Querträgers mit einem Heckwagen-Rohbau der Karosserie des elektrisch antreibbaren Personenkraftwagens verbunden ist. US 2021/078638 A1 offenbart eine Verbindungseinrichtung zum Verbinden eines Batteriegehäuses mit einer Fahrzeugkarosserie.

Generell besteht bei derartigen Personenkraftwagen, welche nicht zuletzt aufgrund der mitgeführten Batterie ein erhebliches Fahrzeuggewicht aufweisen, beispielsweise bei einer Frontalkollision des Fahrzeugs mit einem Unfallpartner beziehungsweise einer Barriere die Problematik, dass infolge der Trägheit der Masse des Heckwagen-Rohbaus eine Relativbewegung von diesem gegenüber der Batterie entstehen kann. Hierbei schiebt sich bei einer derartigen Frontalkollision mit geringer Breitenüberdeckung des Fahrzeugs mit dem Unfallpartner beziehungsweise einer Barriere der Heckwagen-Rohbau unter Umständen über das Batteriegehäuse der Batterie hinweg in Fahrzeuglängsrichtung in Richtung nach vorne. Sind die Bewegungen dabei zu groß, kann es zu Intrusionen des Heckwagen-Rohbaus in die Batterie beziehungsweise ihrem Batteriegehäuse kommen. Besonders problematisch ist es hierbei, wenn die Schraubelemente zur Fixierung des Batteriegehäuses am Heckwagen-Rohbau in Folge der Relativbewegung der beiden Bauteile abscheren, da dies üblicherweise besonders große Intrusionen in das Batteriegehäuse bedingt.

Aufgabe der vorliegenden Erfindung ist es daher, eine Verbindungseinrichtung der eingangs genannten Art zu schaffen, mit welcher sich übermäßige Beschädigungen der Batterie beziehungsweise des Batteriegehäuses zuverlässig vermeiden lassen.

Diese Aufgabe wird erfindungsgemäß durch eine Verbindungseinrichtung mit den Merkmalen des Anspruchs 1 gelöst. Vorteilhafte Weiterbildungen sind Gegenstand der abhängigen Ansprüche.

Die erfindungsgemäße Verbindungseinrichtung zum Verbinden eines Batteriegehäuses für eine Batterie eines elektrisch antreibbaren Kraftwagens mit einem Heckwagen-Rohbau einer Karosserie des Kraftwagens umfasst dabei einen Querträger, in welchem eine Mehrzahl von Befestigungshülsen aufgenommen sind, welche jeweils von einem Schraubelement durchsetzt sind, mittels welchen das Batteriegehäuse mittels des Querträgers am Heckwagen-Rohbau befestigt sind. Erfindungsgemäß sind dabei die jeweiligen Befestigungshülsen mit einer Crashstruktur versehen, welche bei einer unfallbedingten Bewegung des Heckwagen-Rohbaus relativ zu dem Batteriegehäuse, insbesondere infolge einer Frontalkollision des Kraftwagens mit einem Unfallpartner oder einem Hindernis mit geringer Breitenüberdeckung, unter Energieabsorption deformierbar sind.

Kommt es demzufolge bei einer derartigen Frontalkollision mit geringer Breitenüberdeckung des Kraftwagens mit einem Unfallpartner oder einem Hindernis (offset-Crash) infolge der Trägheit der Masse des Heckwagen-Rohbaus im Wesentlichen zu einer Schubbewegung von diesem relativ zu der Batterie beziehungsweise dem Batteriegehäuse in Fahrzeuglängsrichtung nach vorne, so wird zunächst mittels der Verbindungseinrichtung gewährleistet, dass die auftretenden Kräfte über den Querträger in die entsprechende Lastpfade abgeleitet beziehungsweise in den Karosserierohbau eingeleitet werden. Hierbei ist beispielsweise ein Ableiten der Kräfte über das Batteriegehäuse selbst sowie gegebenenfalls über einen Batterietragrahmen, zu welchem der Querträger gegebenenfalls zugeordnet werden kann, in entsprechende Oberstrukturen der Kraftwagenkarosserie denkbar. Hierzu sind insbesondere jeweilige Längsträger und/oder Querträger der Kraftwagenkarosserie vorgesehen. Bei einem entsprechend erheblichen Unfall mit einer Relativbewegung des Rohbau-Heckwagens zu dem Batteriegehäuse in Fahrzeuglängsrichtung nach vorne wird dann im weiteren Verlauf des Unfallszenarios zumindest ein Teil der Energie in den deformierbaren Befestigungshülsen absorbiert, in welchen die jeweiligen Schraubelemente aufgenommen sind.

Bei einer Überlast kommt es dann im weiteren Verlauf des Unfallszenarios zu einem gezielten Brechen oder dergleichen Versagen der Schrauben, sodass der Heckwagen-Rohbau danach entlang beziehungsweise über die Batterie und das Batteriegehäuse mit den zu schützenden Batteriemodulen geschoben werden kann. Durch eine geeignete Verbindungseinrichtung, welche auf die Masse des Heckwagen-Rohbaus sowie der Batterie abgestimmt ist, kann somit eine optimale Verteilung der bei der beschriebenen Frontalkollision auftretenden hohen Energie in entsprechende streife Strukturen der Karosserie mittels des Querträgers, der deformierbaren Befestigungshülsen und am Ende des Unfallszenarios durch die Entkopplung von Rohbau und Batterie erreicht werden, so dass keine übermäßigen Intrusionen in das Batteriegehäuse erfolgen und somit selbst bei schweren Unfällen die Hochvoltkomponenten der Batterie unbeschädigt bleiben. Die Abstimmung des Querträgers, der Befestigungshülsen sowie der Schraubelemente ist dabei insbesondere hinsichtlich des Kraftniveaus beziehungsweise der zu absorbierenden Energie skalierbar und kann daher flexibel auf beliebige Fahrzeugbaureihen mit unterschiedlichen Abmessungen und Gewichten adaptiert werden.

In weiterer Ausgestaltung der Erfindung hat es sich als vorteilhaft gezeigt, wenn die Befestigungshülsen jeweils eine das Schraubelement umgebende Innenhülse und eine diese umgebende Außenhülse aufweisen, zwischen welchen eine Verbindungsstruktur angeordnet ist. Diese Verbindungsstruktur kann in weiterer Ausgestaltung der Erfindung beispielsweise durch sich radial zwischen der Innenhülse und der Außenhülse erstreckende Stege, aber auch durch andere Gestaltungen, gebildet sein. Insbesondere im Bereich dieser Verbindungsstruktur beziehungsweise durch die Stege kann dann bei einer entsprechenden unfallbedingten Kraftbeaufschlagung, welche auf die Innenhülse infolge der Verbindung zu dem jeweiligen Schraubelement entsteht, die auftretende Energie besonders günstig unter Deformation der Verbindungsstruktur, beispielsweise in Form der Stege, absorbiert werden. Durch die Außenhülse ist dabei eine Begrenzung geschaffen, sodass es im weiteren Verlauf des Unfallszenarios dann zu einem gezielten Versagen der Schraubelemente kommen kann.

In weiterer vorteilhafter Ausgestaltung der Erfindung stehen die Befestigungshülsen aus dem Querträger in Richtung zum Heckwagen-Rohbau hin über. Dadurch lässt sich eine besonders günstige Verbindung zwischen dem Querträger und dem Heckwagen-Rohbau unter Zwischenanordnung des Batteriegehäuses realisieren.

Eine weitere vorteilhafte Ausführungsform der Erfindung sieht vor, dass der Querträger jeweilige, eine Mehrzahl von in Fahrzeughochrichtung übereinander angeordnete Kammern unterteilende Kammerwände aufweist, welche unterschiedliche Wandstärken aufweisen. Durch geeignete Gestaltung der jeweiligen Wandstärken der Kammerwände lässt sich somit die Steifigkeit und das Energieabsorptionsvermögen des Querträgers im Verhältnis zu den Befestigungshülsen und den Schraubelementen sowie insgesamt im Verhältnis zur Dimensionierung und dem Gewicht des Gesamtfahrzeugs, des Heckwagen-Rohbaus sowie der Batterie abstimmen.

Eine weitere vorteilhafte Ausführungsform sieht vor, dass bei einer unfallbedingten Bewegung des Heckwagen-Rohbaus relativ zu dem Batteriegehäuse in Folge einer Frontalkollision zunächst eine Deformation der Befestigungshülsen erfolgt, bevor die Schraubelemente versagen. Eine geeignete Abstimmung des Energieabsorptionsvermögens der Befestigungshülsen sowie der maximalen Belastung der Schraubelemente ergibt somit eine gewünschte Abfolge bei einer unfallbedingten Relativbewegung des Heckwagen-Rohbaus relativ zum Batteriegehäuse.

Weiterhin hat es sich als vorteilhaft gezeigt, dass sich nach dem Versagen der Schraubelemente der Heckwagen-Rohbau in Fahrzeuglängsrichtung nach vorne relativ zu dem Batteriegehäuse verschiebt. Bei einem Brechen oder dergleichen versagen der Schraubelemente in Folge einer entsprechenden Überlast kann somit eine Entkopplung zwischen dem Heckwagenrohbau und der Batterie erfolgen, um Batterieintrusionen auf ein Minimum zu reduzieren, selbst wenn ein schwerer Unfall erfolgt.

Eine weitere vorteilhafte Ausführungsform der Erfindung sieht vor, dass das Batteriegehäuse Durchgangsöffnungen aufweist, welche von den jeweiligen Schraubelementen durchsetzt sind. Hierdurch ergibt sich einerseits eine besonders günstige Festlegung des Batteriegehäuses am Heckwagen-Rohbau und andererseits eine besonders günstige Möglichkeit zur Abstimmung der beschriebenen, dreistufigen Abfolge bei der Relativbewegung des Heckwagen-Rohbaus relativ zum Batteriegehäuse.

Schließlich hat es sich als vorteilhaft gezeigt, wenn der Querträger mit den Befestigungshülsen am Batteriegehäuse vormontiert ist. Somit lässt sich der Montageaufwand der Verbindungseinrichtung auf ein Minimum reduzieren.

Weitere Vorteile, Merkmale und Einzelheiten der Erfindung ergeben sich aus der nachfolgenden Beschreibung eines bevorzugten Ausführungsbeispiels sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Dabei zeigen:
- Fig. 1: eine Perspektivansicht von schräg hinten außen auf einen Heckwagenrohbau sowie vorderseitig und unterhalb von diesem angeordneten, ausschnittsweise erkennbaren Batteriegehäuse, welches unter Vermittlung der erfindungsgemäßen Verbindungseinrichtung am rückwärtigen Ende des Batteriegehäuses mit dem Heckwagen-Rohbau verbunden ist;
- Fig. 2: eine ausschnittsweise Unteransicht auf die Verbindungseinrichtung zum Verbinden des rückwärtigen Endes des Batteriegehäuses mit dem Heckwagen-Rohbau;
- Fig. 3: eine ausschnittsweise Schnittansicht der Verbindungseinrichtung zum Verbinden des rückwärtigen Endes des Batteriegehäuses mit dem oberhalb davon angeordneten Heckwagen-Rohbau entlang einer durch die Linie III - III in Fig. 2 symbolisierten, sich in Fahrzeuglängsrichtung und vertikal erstreckenden Schnittebene;
- Fig. 4: eine Perspektivansicht eines Querträgers der Verbindungseinrichtung zum Verbinden des rückwärtigen Endes des Batteriegehäuses mit dem Heckwagen-Rohbau, wobei innerhalb des Querträgers auf genau eine Befestigungshülse sowie diese durchsetzende Schraubelemente erkennbar sind, mittels welchen der Querträger und somit das Batteriegehäuse unterseitig des Heckwagen-Rohbaus festlegbar ist;
- Fig. 5: eine Schnittansicht durch den Querträger gemäß Fig. 4, wobei die Integration einer der Befestigungshülsen erkennbar ist;
- Fig. 6a, 6b: eine perspektivische Seitenansicht sowie eine Draufsicht auf eine der in den Querträger integrierten Befestigungshülsen; und
- Fig. 7: eine Seitenansicht auf eines der die jeweils zugeordnete Befestigungshülse durchsetzende Schraubelement, mittels welchem der Querträger und somit das Batteriegehäuse unterseitig des Heckwagen-Rohbaus verschraubbar ist.

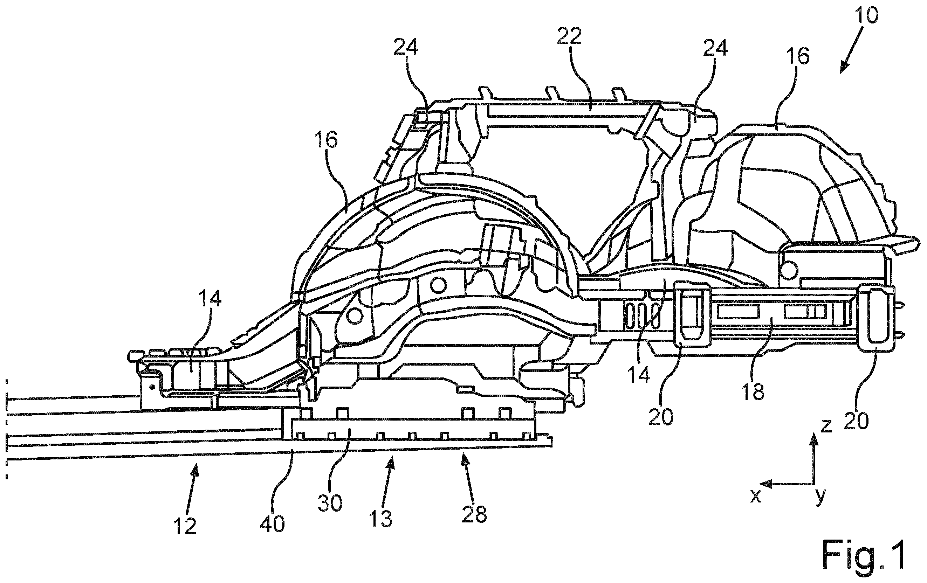

In Fig. 1 ist in einer Perspektivansicht von schräg hinten ein Heckwagen-Rohbau 10 einer Personenkraftwagenkarosserie eines elektrisch antreibbaren Personenkraftwagens dargestellt, welcher zur Versorgung des elektrischen Antriebs eine Hochvolt-Batterie umfasst, welche in einem in Fig. 1 mit einem hinteren Endbereich erkennbaren Batteriegehäuse 12 aufgenommen ist. Demzufolge ist das Batteriegehäuse 12 mit seinem bezogen auf die Fahrzeuglängsrichtung (x-Richtung) hinteren Ende vorderseitig und unterhalb an dem Heckwagen-Rohbau 10 mittels einer im Weiteren noch näher erläuterten Verbindungseinrichtung befestigt.

Von der Heckwagenstruktur 10 sind in Fig. 1 im Wesentlichen jeweilige Längsträger 14 erkennbar, welche nach vorne hin in nicht erkennbare Seitenschweller im Bereich eines Hauptbodens der Personenkraftwagenkarosserie übergehen. Nach hinten hin erstrecken sich diese Längsträger 14 innenseitig jeweiliger Radhaus-Rohbauteile 16, für jeweilige Hinterräder des Personenkraftwagens. Am rückwärtigen Ende des Heckwagen-Rohbaus 10 ist außerdem ein Querträger 18 erkennbar, welcher einen nicht erkennbaren Heckboden, welcher sich zwischen den Längsträgern 14 erstreckt, nach hinten hin begrenzt. Ebenfalls erkennbar sind jeweilige hintere Enden 20 der Längsträger 14 mit jeweiligen Flanschen, an welchen ein Heckmodul des Kraftwagens montiert werden kann. Außerdem erkennbar ist ein weiterer Querträger 22, welcher jeweilige Federbeindome 24, welche oberseitig der Radhaus-Rohbauteile 16 nach oben hin abstehen, miteinander verbindet.

Auf Höhe des hinteren Endes 13 des Batteriegehäuses 12 verläuft außerdem ein Querträger 26 zwischen den Längsträgern 14, welche - bezogen auf die Fahrzeuglängsrichtung (x-Richtung) - in diesem Bereich in ihrem Verlauf von der Fahrzeugaußenseite nach innen innerhalb der jeweiligen Radhaus-Rohbauteile 16 übergehen.

Schließlich ist aus Fig. 1 eine im Weiteren noch näher erläuterte Verbindungseinrichtung 28 erkennbar, mittels welcher ein hinteres Ende 13 des Batteriegehäuses 12 unterseitig des Heckwagen-Rohbaus 10 beispielsweise im Bereich des Querträgers 26 und/oder im Übergangsbereich der Längsträger 14 von der Fahrzeugaußenseite zu ihrer Position innerhalb dieser jeweiligen Radhaus-Rohbauteile 16 hin befestigt ist.

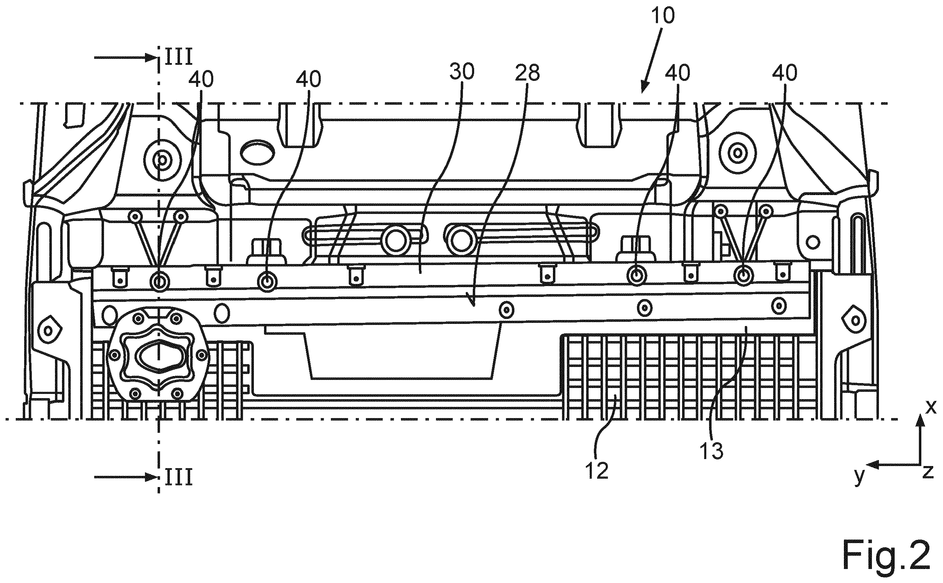

Fig. 2 zeigt in einer ausschnittsweisen Unteransicht die Verbindungseinrichtung 28 zum Verbinden des hinteren Endes 13 des Batteriegehäuses 12 mit dem Heckwagen-Rohbau 10 der Personenkraftwagenkarosserie im Bereich des Querträgers 26.

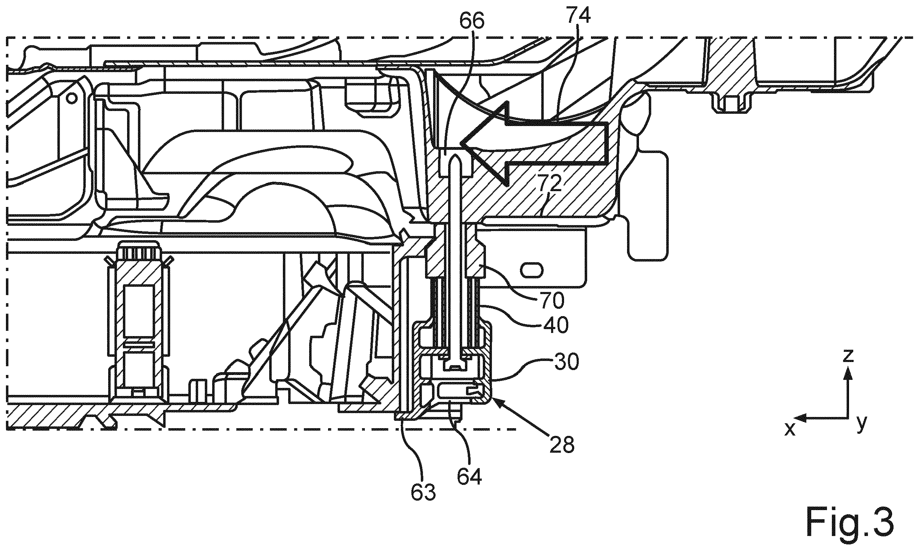

In Zusammenschau mit Fig. 3, welche in einer ausschnittsweisen Schnittansicht die Verbindungseinrichtung 28 entlang einer in Fahrzeuglängsrichtung (x-Richtung) beziehungsweise in Fahrzeughochrichtung (y-Richtung) und vertikal verlaufenden, durch die Schnittlinie III - III in Fig. 2 symbolisierten Schnittebene zeigt, wird dabei die genaue Befestigung des hinteren Endes 13 des Batteriegehäuses 12 am korrespondierenden Querträger 26 des Heckwagen-Rohbaus 10 ersichtlich.

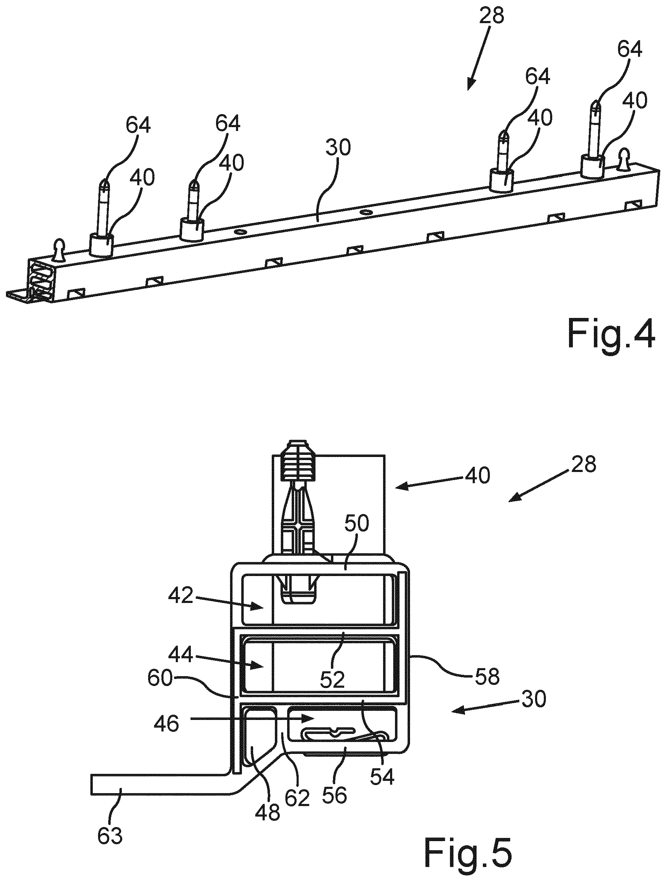

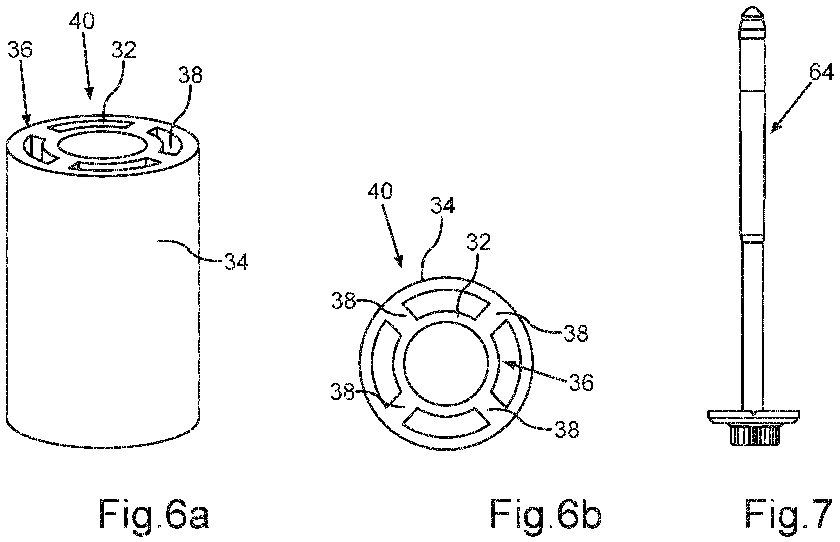

Insbesondere erkennbar ist in Fig. 3 hierbei ein Querträger 30 der Verbindungseinrichtung 28, welcher in Fig. 4 separat dargestellt ist. In diesem Querträger 30 sind vorliegend vier Befestigungshülsen 40 aufgenommen beziehungsweise integriert. Eine dieser Befestigungshülsen 40 ist hierbei in den Fig. 6a und 6b in einer perspektivischen Seitenansicht beziehungsweise einer Draufsicht dargestellt und umfasst eine Innenhülse 32, welche konzentrisch zu einer Außenhülse 34 angeordnet ist. Im vorliegenden Fall sind sowohl die Innenhülse 32 als auch die Außenhülse 34 rohrförmig beziehungsweise im Querschnitt ringförmig gestaltet, wobei hier auch andere Querschnitte denkbar wären, wobei insbesondere zwischen Innenhülse 32 und Außenhülse 34 ein Abstand vorgesehen ist. Dieser Abstand ist im vorliegenden Fall durch eine Verbindungsstruktur 36 überbrückt, welche vorliegend vier Stege 38 umfasst, welche sich in einem Winkel von jeweils etwa 90 Grad zueinander zwischen der Innenhülse 32 und der Außenhülse 34 radial nach außen hin erstrecken. Die gesamte Befestigungshülse 40 ist vorliegend beispielsweise durch Strangpressen eines geeigneten Metall- oder gegebenenfalls auch Kunststoffwerkstoffes gebildet. Natürlich sind auch andere Fertigungsverfahren denkbar. Insbesondere kann auch die Verbindungsstruktur 36 mit den Stegen 38 andersartig gestaltet sein. Außerdem weist die Befestigungshülse 40, wie noch erläutert werden wird, eine Crashstruktur auf.

Wie nun im Weiteren in Zusammenschau mit Fig. 5 erkennbar ist, welche die Integration einer der vier Befestigungshülsen 40 im Querträger 30 zeigt, deutlich wird, ist die jeweilige Befestigungshülse 40 beispielsweise in ein entsprechend an den Umfang von dieser angepasstes Sackloch in dem Querträger 30 eingesetzt und beispielsweise durch ein geeignetes Fügverfahren wie Schweißen, Kleben oder dergleichen befestigt.

Des Weiteren ist insbesondere aus Fig. 5 erkennbar, dass der Querträger vorliegend jeweilige, eine Mehrzahl von in Fahrzeughochrichtung (z-Richtung) übereinander angeordnete Kammern 42, 44, 46, 48 unterteilende Kammerwände 50, 52, 54, 56 umfasst sowie Kammerwände 58, 60, welche den Querträger 30 in Fahrzeuglängsrichtung (x-Richtung) nach vorne beziehungsweise nach hinten hin begrenzen und verschließen. Die untersten Kammern 46, 48 sind durch eine weitere Kammerwand 62 unterteilt. Außerdem ist am vorderen unteren Ende die entsprechende Kammerwand 56 um einen Flansch 63 verlängert.

Die jeweiligen Befestigungshülsen 40 sind dabei bis zur Abstützung an der Kammerwand 54 in den Querträger 30 eingesetzt. Außerdem weist die Kammerwand 56 eine jeweilige Durchgangsöffnung auf, sodass ein Schraubelement 64 gemäß Fig. 7 von unten her derart durch die Kammerwand 56 hindurchsteckbar und die Innenhülse 32 der Befestigungshülse 40 durchsetzbar angeordnet werden kann, das über diese jeweiligen Schraubelemente 64 der Querträger 30 - und unter dessen Vermittlung das Batteriegehäuse 12 mit seinem hinteren Ende 13 unterseitig des Heckwagen-Rohbaus 10 befestigbar ist, wie diese insbesondere in Fig. 3 deutlich wird.

Die jeweiligen, als Schrauben ausgebildeten Schraubelemente 64 sind dabei in jeweilige Gewindehülsen 66 einschraubbar, welche in Fig. 3 erkennbar und beispielsweise im Bereich des Querträgers 26 rohbauseitig befestigt sind. Mit ihrem Kopf stützen sich die Schrauben 64 dabei unterseitig des Querträgers 30 ab.

Aus Fig. 3 ist überdies erkennbar, dass der Querträger 30 am hinteren Ende des Batteriegehäuses 12 über den Flansch 64 angebunden ist. Der Querträger 30 kann dabei beispielsweise auch Teil eines Tragrahmens des Batteriegehäuses 12 sein.

Weiterhin ist insbesondere in Zusammenschau der Fig. 3, 4 und 5 erkennbar, dass die jeweiligen Befestigungshülsen 40 mit einem im Hinterwagen-Rohbau 10 zugewandten Ende gegenüber dem Querträger 30 überstehen und es sich an jeweiligen Hülsenteilen 70 abstützen, welche als Teil des Batteriegehäuses 12 beziehungsweise eines entsprechenden Batterietragrahmens ausgebildet sind. Die jeweiligen Schraubelemente 64 durchsetzen demzufolge nicht nur die Innenhülse 32 der jeweiligen Befestigungshülse 40, sondern auch das sich jeweils oberseitig anschließende Hülsenteil 70 des Batteriegehäuses 12. Dieses Hülsenteil 70 des Batteriegehäuses 12 stützt sich dabei oberseitig an der Unterseite des Heckwagen-Rohbaus 10 im Bereich einer Wand 72 ab. Durch Anziehen der Schraubelemente 64 wird somit mittels des Querträgers 30 und der jeweiligen Befestigungshülsen 40 das Batteriegehäuse 12 - unter Vermittlung der Hülsenteile 70 - unterseitig des Heckwagen-Rohbaus 10 am rückwärtigen Ende festgelegt.

Kommt es nun beispielsweise in Folge einer Frontalkollision des Personenkraftwagens mit einem Unfallpartner oder einem Hindernis mit geringer Breitenüberdeckung (offset-Crash) zu einer mit einem Pfeil 74 in Fig. 3 angedeuteten, in Folge der gewichtsbedingten Trägheit des Heckwagen-Rohbaus 10 bedingten Relativbewegung zum Batteriegehäuse 12, so wird über die Verbindungseinrichtung 28, insbesondere unter Vermittlung der Schraubelemente 64, zunächst entsprechende Kräfte aus dem Heckwagen-Rohbau 10 über die Verbindungseinrichtung 28 über den Querträger 30 in die steifen Strukturen abgeleitet.

Bei einem entsprechend erheblichen Unfall, bei welchem höhere Kräfte beziehungsweise eine höhere Energie entsteht, wird im weiteren Verlaufen des Unfallszenarios ein Teil dieser Energie dann mittels der Befestigungshülsen 40 abgebaut. Hierbei ist beachtlich, dass die Befestigungshülsen 40 insbesondere durch die Verbindungsstruktur 36, welche durch die vier Stege 38 gebildet wird, eine Crashstruktur aufweisen, sodass diese bei Einleitung weiterer Kräfte über die Schraubelemente 64 entsprechend unter Energieabsorption deformiert werden können. Hierbei kann beispielsweise die Innenhülse 32 in Folge einer entsprechenden Kraftbeaufschlagung durch das Schraubelement 64 relativ zur Außenhülse 34 unter Absorption von Aufprallenergie, insbesondere innerhalb der als Crashstruktur wirkenden Verbindungsstruktur 36, in Fahrzeuglängsrichtung (x-Richtung) nach vorne hin verlagert werden.

Sollte die Frontalkollision entsprechend derart stark ausfallen, dass auch die Befestigungshülsen 40 nicht zur Absorption der gesamten Aufprallenergie ausreichen, so führt ein weiteres Verschieben des Heckwagen-Rohbaus 10 gemäß dem Pfeil 74 in Fahrzeuglängsrichtung nach vorne relativ zu dem Batteriegehäuse 12 dazu, dass in Folge einer entsprechenden Überlast schlussendlich die Schraubelemente 64 versagen und beispielsweise brechen. Sodann kann der Heckwagen-Rohbau 10 kontrolliert über das Batteriegehäuse 12 beziehungsweise die innerhalb von diesem angeordneten, zu schützenden Batteriemodule hinweg in Fahrzeuglängsrichtung (x-Richtung) nach vorne verschoben werden.

Hierbei ist insbesondere aus Fig. 3 erkennbar, dass der Heckwagen-Rohbau 10 im unterseitigen Bereich sowie das Batteriegehäuse 12 im oberen hinteren Bereich des Endes 13 so ausgebildet sind, dass ein derartiges Verschieben nach einem Versagen der Schraubelemente 64 möglich ist. Durch die optimale Verteilung der im Unfall auftretenden hohen Energie auf steife Strukturen des Querträgers 30, die deformierbaren Befestigungshülsen 40 und am Ende des Unfallscenarios durch die Entkopplung des Heckwagen-Rohbaus 10 von dem Batteriegehäuse 12 kann somit eine übermäßige Intrusion in dieses und eine übermäßige Beschädigung von Hochvoltkomponenten der Batterie vermieden werden. Die Abstimmung dieser drei Elemente im Schutzmechanismus der beschriebenen Verbindungseinrichtung 28 können dabei hinsichtlich des Kraftniveaus beziehungsweise der zu absorbierenden Energie, welche in erster Linie von einem entsprechenden Gewicht des Heckwagen-Rohbaus 10, des Batteriegehäuses 12 sowie der Kraftwagenkarosserie insgesamt abhängig ist, skalierbar und daher flexibel auf jegliche andere Fahrzeugbaureihen adaptiert werden.

Besonders vorteilhaft kann der Querträger 30 mit den Befestigungshülsen 40 am Batteriegehäuse 12 vormontiert sein.

Beachtenswert ist überdies, dass beispielsweise der Querträger 30 hinsichtlich seiner Kammerwände 50 bis 62 derartig eingestellt werden kann, dass auch dieser in optimaler Weise auf die Reihenfolge bei der Absorption von Unfallenergie abgestimmt werden kann.

Zusammenfassend bleibt festzuhalten, dass aufgrund der erfindungsgemäßen Ausgestaltung der Verbindungseinrichtung bei einer Kollision, insbesondere einem Frontcrash, das heißt einem Anprall an beziehungsweise der Fahrzeugfront, der nachschiebende Heckwagen zuerst die auftretenden Kräfte über den Querträger in die steifen Strukturen ableitet. Ein Teil der Energie wird in den deformierbaren Hülsen abgebaut. Bei einer Überlast brechen die Schrauben und der Rohbau kann über die zu schützenden Batteriemodule schieben. Durch die optimale Verteilung der im Unfall auftretenden hohen Energie auf steife Strukturen des Batteriequerträgers, die deformierbaren Hülsen und am Ende durch die Entkoppelung von Rohbau und Batterie kann die Batterieintrusion auf ein Minimum reduziert werden und selbst in schweren Unfällen bleiben die Hochvoltkomponenten der Batterie unbeschädigt.

## Patentansprüche

1. Verbindungseinrichtung (28) zum Verbinden eines Batteriegehäuses (12) mit einem Heckwagen-Rohbau (10) einer Karosserie eines elektrisch antreibbaren Personenkraftwagens, mit einem Querträger (30), in welchem eine Mehrzahl von Befestigungshülsen (40) aufgenommen sind, welche durchsetzt sind von einem jeweils zugeordneten Schraubelement (64) zur Verbindung des Batteriegehäuses (12) mittels des Querträgers (30) mit dem Heckwagen-Rohbau (10),
**dadurch gekennzeichnet, dass**
die Befestigungshülsen (40) eine Crashstruktur aufweisen, welche bei einer unfallbedingten Bewegung des Heckwagen-Rohbaus (10) relativ zu dem Batteriegehäuse (12) unter Energieabsorption deformierbar sind.

2. Verbindungseinrichtung (28) nach Anspruch 1,
**dadurch gekennzeichnet, dass**
die Befestigungshülsen (40) jeweils eine das Schraubelement (64) umgebende Innenhülse (32) und eine diese umgebende Außenhülse (34) aufweisen, zwischen welchen eine Verbindungsstruktur (36) angeordnet ist.

3. Verbindungseinrichtung (28) nach Anspruch 2,
**dadurch gekennzeichnet, dass**
die Verbindungsstruktur (36) durch eine Mehrzahl von sich zwischen der Innenhülse (32) und der Außenhülse (34) in radialer Richtung zur Längsmittelachse der Innenhülse (32) oder der Außenhülse (34) erstreckende Stege (38) gebildet ist.

4. Verbindungseinrichtung (28) nach einem der vorhergehenden Ansprüche,
**dadurch gekennzeichnet, dass**
die Befestigungshülsen (40) aus dem Querträger (30) in Richtung zum Heckwagen-Rohbau (10) hin überstehen.

5. Verbindungseinrichtung (28) nach einem der vorhergehenden Ansprüche,
**dadurch gekennzeichnet, dass**
der Querträger (30) jeweilige, eine Mehrzahl von in Fahrzeughochrichtung übereinander angeordnete Kammern (42 - 48) unterteilende Kammerwände (50 - 62) aufweist, welche unterschiedliche Wandstärken aufweisen.

6. Verbindungseinrichtung (28) nach Anspruch 5,
**dadurch gekennzeichnet, dass**
bezogen auf die Fahrzeughochrichtung mittlere Kammerwände (52, 54) gegenüber äußeren Kammerwänden (50, 56) eine größere Wandstärke aufweisen.

7. Verbindungseinrichtung (28) nach einem der vorhergehenden Ansprüche,
**dadurch gekennzeichnet, dass**
bei einer unfallbedingten Bewegung des Heckwagen-Rohbaus (10) relativ zu dem Batteriegehäuse (12) infolge einer Frontalkollision zunächst eine Deformation der Befestigungshülsen (40) erfolgt, bevor die Schraubelemente (64) versagen.

8. Verbindungseinrichtung (28) nach Anspruch 7,
**dadurch gekennzeichnet, dass**
sich nach dem Versagen der Schraubelemente (64) der Heckwagen-Rohbau in Fahrzeuglängsrichtung nach vorne relativ zu dem Batteriegehäuse (12) verschiebt.

9. Verbindungseinrichtung (28) nach einem der vorhergehenden Ansprüche,
**dadurch gekennzeichnet, dass**
das Batteriegehäuse (12) von den jeweiligen Schraubelementen (64) durchsetzt ist.

10. Verbindungseinrichtung nach einem der vorhergehenden Ansprüche,
**dadurch gekennzeichnet, dass**
der Querträger (30) mit den Befestigungshülsen (40) am Batteriegehäuse (12) vormontiert ist.

## Claims

1. Connecting device (28) for connecting a battery housing (12) to a rear body shell (10) of a body of an electrically powered passenger car, having a cross member (30) in which a plurality of fastening sleeves (40) are received, which are penetrated in each case by an associated screw element (64) for connecting the battery housing (12) to the rear body shell (10) by means of the cross member (30),
**characterized in that**
the fastening sleeves (40) have a crash structure which, in the event of an accident-related movement of the rear body shell (10) relative to the battery housing (12), can be deformed under energy absorption.

2. Connecting device (28) according to claim 1,
**characterized in that**
the fastening sleeves (40) each have an inner sleeve (32) surrounding the screw element (64) and an outer sleeve (34) surrounding the inner sleeve, between which a connecting structure (36) is arranged.

3. Connecting device (28) according to claim 2,
**characterized in that**
the connecting structure (36) is formed by a plurality of connecting portions (38) extending between the inner sleeve (32) and the outer sleeve (34) in a radial direction to the longitudinal center axis of the inner sleeve (32) or the outer sleeve (34).

4. Connecting device (28) according to any of the preceding claims,
**characterized in that**
the fastening sleeves (40) protrude from the cross member (30) toward the rear body shell (10).

5. Connecting device (28) according to any of the preceding claims,
**characterized in that**
the cross member (30) has respective chamber walls (50 - 62) which divide a plurality of chambers (42 - 48) arranged one above the other in the vertical direction of the vehicle and have different wall thicknesses.

6. Connecting device (28) according to claim 5,
**characterized in that**
with respect to the vehicle's vertical direction, middle chamber walls (52, 54) have a greater wall thickness than outer chamber walls (50, 56).

7. Connecting device (28) according to any of the preceding claims,
**characterized in that**
in the event of an accident-related movement of the rear body shell (10) relative to the battery housing (12) as a result of a frontal collision, the fastening sleeves (40) are first deformed, before the screw elements (64) fail.

8. Connecting device (28) according to claim 7,
**characterized in that**
following the failure of the screw elements (64), the rear body shell shifts forward in the longitudinal direction of the vehicle relative to the battery housing (12).

9. Connecting device (28) according to any of the preceding claims,
**characterized in that**
the battery housing (12) is penetrated by the respective screw elements (64).

10. Connecting device according to any of the preceding claims,
**characterized in that**
the cross member (30) is pre-assembled with the fastening sleeves (40) on the battery housing (12).

## Revendications

1. Dispositif de liaison (28) destiné à relier un boîtier de batterie (12) à une caisse en blanc de bloc arrière (10) d'une carrosserie d'une voiture particulière à entraînement électrique, comportant une traverse (30), dans laquelle sont logées une pluralité de douilles de fixation (40) qui sont traversées par un élément de vissage (64) respectivement associé, destiné à relier le boîtier de batterie (12) à la caisse en blanc de bloc arrière (10) par le biais de la traverse (30),
**caractérisé en ce que**
les douilles de fixation (40) présentent une structure d'absorption d'énergie qui, lors d'un mouvement dû à un accident de la caisse en blanc de bloc arrière (10) par rapport au boîtier de batterie (12), se déforme en absorbant l'énergie.

2. Dispositif de liaison (28) selon la revendication 1,
**caractérisé en ce que**
les douilles de fixation (40) présentent respectivement une douille intérieure (32) entourant l'élément de vissage (64) et une douille extérieure (34) entourant celle-ci, entre lesquelles est agencée une structure de liaison (36).

3. Dispositif de liaison (28) selon la revendication 2,
**caractérisé en ce que**
la structure de liaison (36) est formée par une pluralité de nervures (38) s'étendant entre la douille intérieure (32) et la douille extérieure (34) dans un sens radial par rapport à l'axe longitudinal de la douille intérieure (32) ou de la douille extérieure (34).

4. Dispositif de liaison (28) selon l'une des revendications précédentes,
**caractérisé en ce que**
les douilles de fixation (40) dépassent de la traverse (30) en direction de la caisse en blanc de bloc arrière (10).

5. Dispositif de liaison (28) selon l'une des revendications précédentes,
**caractérisé en ce que**
la traverse (30) présente des cloisons (50 - 62) de compartiment qui divisent une pluralité de compartiments (42 - 48) agencés les uns au-dessus des autres dans le sens de la hauteur du véhicule, lesquelles cloisons présentent des épaisseurs de cloison différentes.

6. Dispositif de liaison (28) selon la revendication 5,
**caractérisé en ce que**
par rapport au sens de la hauteur du véhicule, les parois (52, 54) de compartiment centrales présentent une épaisseur supérieure à celle des parois (50, 56) de compartiment extérieures.

7. Dispositif de liaison (28) selon l'une des revendications précédentes,
**caractérisé en ce que**
lors d'un mouvement dû à un accident de la caisse en blanc de bloc arrière (10) par rapport au boîtier de batterie (12) à la suite d'une collision frontale, une déformation des douilles de fixation (40) se produit dans un premier temps, avant la rupture des éléments de vissage (64).

8. Dispositif de liaison (28) selon la revendication 7,
**caractérisé en ce que**
après la rupture des éléments de fixation (64), la caisse en blanc de bloc arrière se déplace vers l'avant dans le sens longitudinal du véhicule par rapport au boîtier de batterie (12).

9. Dispositif de liaison (28) selon l'une des revendications précédentes,
**caractérisé en ce que**
le boîtier de batterie (12) est traversé par les éléments de vissage (64) respectifs.

10. Dispositif de liaison selon l'une des revendications précédentes,
**caractérisé en ce que**
la traverse (30) est pré-montée sur le boîtier de batterie (12) à l'aide des douilles de fixation (40).
